(19) Europäisches Patentamt / European Patent Office / Office européen des brevets

(11) **EP 4 001 966 A1**

(12) **EUROPEAN PATENT APPLICATION**

(43) Date of publication:
**25.05.2022 Bulletin 2022/21**

(21) Application number: **20207004.1**

(22) Date of filing: **11.11.2020**

(51) International Patent Classification (IPC):
**G01S 17/931** (2020.01)     **G01S 13/931** (2020.01)
**G01S 7/02** (2006.01)     **G01S 13/88** (2006.01)
**G01S 7/03** (2006.01)

(52) Cooperative Patent Classification (CPC):
**G01S 13/931; G01S 7/024; G01S 7/03; G01S 13/88**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Technologies Limited
St. Michael (BB)**

(72) Inventors:
• **Vollbracht, Dennis**
  **40699 Erkrath (DE)**
• **Torres, Felipe**
  **40723 Hilden (DE)**

(74) Representative: **Manitz Finsterwald
Patent- und Rechtsanwaltspartnerschaft mbB
Martin-Greif-Strasse 1
80336 München (DE)**

(54) **AUTOMOTIVE RADAR SYSTEM**

(57)     An automotive radar system (1) for detecting target objects (3) in a traffic scene comprises an arrangement of transmit antennas (110), an arrangement of receive antennas (120), and a radar circuit connected to the transmit antennas and the receive antennas. Each transmit antenna is configured to transmit coherent superpositions of respective first transmit radar signals having first transmit polarizations and respective second transmit radar signals having second transmit polarizations. Each receive antenna is configured to separate target reflections of the transmitted radar signals received from the target objects into first signal portions having first receive polarizations and into second signal portions having second receive polarizations. The radar circuit is configured to vary resulting transmit polarizations of the transmitted superpositions of transmit radar signals and to coherently evaluate the first and second signal portions received by the individual receive antennas to determine polarization properties of the received target reflections.

Fig. 2

Fig. 8

**Description**

FIELD

The present disclosure relates to an automotive radar system.

BACKGROUND

Radar systems are used in automotive applications to detect and locate target objects such as other vehicles, obstacles or lane boundaries. They may be placed at the front, at the rear or at the sides of a vehicle. Such radar devices usually comprise a radar circuit to generate a radar signal and an antenna device for illuminating the target objects with the radar signal and for capturing target reflection of the radar signal reflected back from the target objects. The received target reflections are subsequently analyzed by the radar circuit to detect and/or classify the target objects. The information extracted from the reflected radar signal may then be used for advanced driver's assist system (ADAS) functions, such as emergency brake assist, adaptive cruise control, lane change assist or the like.

The antenna devices of such radar systems are usually configured to illuminate the target objects with a radar signal having a fixed, predetermined polarization and to receive a fixed, predetermined polarization component of the target reflections. Furthermore, the polarization for reception usually equals the polarization for transmission. However, depending on the scattering properties of the target objects, the polarization of the radar signal may change upon reflection or scattering at the target objects so that the polarization of the target reflections does not match the polarization component captured by the antenna device. A change of the polarization of the radar signal upon reflection may therefore influence the amplitude of the received signal portion and thus the perceived radar cross-section of the target object.

Classification of different target objects is usually based on the spatial positions of individual scattering centers and the intensity of the target reflections received from the individual scattering centers. Additional information, such as the material or structure of the scattering centers is usually not accessible for target classification. This ultimately limits the possibility to differentiate individual target objects detected with the radar system.

Accordingly, there is a need to increase the target information obtainable by automotive radar systems.

SUMMARY

The present disclosure provides an automotive radar system according to the independent claim. Embodiments are given in the dependent claims, the description and the drawings.

In a first aspect, the present disclosure is directed at an automotive radar system for detecting target objects in a traffic scene, wherein the radar system comprises an arrangement of transmit antennas, an arrangement of receive antennas, and a radar circuit connected to the transmit antennas and the receive antennas. Each transmit antenna is configured to transmit coherent superpositions of respective first transmit radar signals having first transmit polarizations and respective second transmit radar signals having second transmit polarizations that are different from the first transmit polarizations. Each receive antenna is configured to separate target reflections of the transmitted radar signals received from the target objects into first signal portions having first receive polarizations and into second signal portions having second receive polarizations that are different from the first receive polarizations. The radar circuit is thereby configured, for example by processing instructions stored within a control unit and/or a logic unit of the radar circuit, to vary resulting transmit polarizations of the transmitted superpositions of transmit radar signals by coherently generating different sets of first and second transmit radar signals for the individual transmit antennas and by simultaneously and coherently transmitting the first and second transmit radar signals of the individual sets via their respective transmit antennas. The radar circuit is further configured, for example by processing instructions stored within a control unit and/or a logic unit of the radar circuit, to coherently evaluate the first and second signal portions received by the individual receive antennas to determine polarization properties of the received target reflections.

By generating the transmitted radar signal as variable superpositions of two independent transmit radar signals, the radar system of the present disclosure can synthesize arbitrary and variable transmit polarizations without the need for dedicated antennas for the individual polarizations generated. For example, the resulting transmit polarization of the superposition of the first and second radar signal may be different from the first and second polarization of the individual transmit radar signals. To vary the resulting transmit polarizations of the superpositions transmitted by the individual transmit antennas, the radar circuit may be configured to vary a phase-ratio and/or an amplitude ratio of the first and second radar signals transmitted via the same antenna.

Furthermore, a coherent evaluation of the separately received first and second signal portions of the reflected radar signal allows for a complete reconstruction of the polarimetric scattering properties of the target objects when being illuminated with the variable transmit polarizations. This includes digital polarization forming on receive by reconstructing the projections of the target reflections on variable receive polarizations from the coherently evaluated first and second signal portions. In this way, varying receive polarizations for each receive antenna are synthe sized by coherently combining the first and second signal portions received by the respective receive antenna. For example, the radar circuit may be configured to reconstruct a radar signal that would be received by an antenna having an antenna polarization that corresponds to the synthesized receive polarization. The synthesized or reconstructed receive polarization may, for example, be different from the first and second receive polarization.

The radar circuit may be configured to vary the transmit polarization of the superposition of radar signals and/or the reconstructed receive polarization during operation of the radar system.

The individual transmit antennas may each be configured as dual-port antennas that receive their respective first radar signal as a first feed signal and their respective second radar signal as a second feed signal. The individual transmit antennas may be configured to radiate the first radar signals having the first transmit polarization and the second radar signals having the second transmit polarization. Likewise, the individual receive antennas may each be configured as dual-port antennas that provide the first signal portion at a first signal port and the second signal portion at a second signal port.

The individual antennas may have a cross-polarization isolation that is larger than 10 dB, for example larger than 14 dB, 20 dB or 30dB, within an angular range of $\pm 40°$, $\pm 60°$, $\pm 90°$ or $\pm 120°$ of the radiation pattern of the individual antennas.

The individual transmit antennas and/or the individual receive antennas may each comprise one radiating element or a multitude of radiating elements. The individual antennas may, for example, comprise arrays of serially-fed radiating elements. The individual antennas may be configured as patch antennas, such as differentially-fed patch antennas, or as slot antennas or the like.

All transmit antennas may be configured to transmit with the same first transmit polarization and/or with the same second transmit polarization. Additionally or alternatively, all receive antennas may receive with the same first receive polarization and/or with the same second receive polarization. Furthermore, the first transmit polarizations may equal the first receive polarizations and/or the second transmit polarizations may equal the second receive polarizations for each individual antenna.

The respective first and second transmit polarizations of the individual transmit antennas may be orthogonal. Additionally or alternatively, the respective first and second receive polarizations of the individual receive antennas may be orthogonal. The transmit polarizations and/or the receive polarizations may be linear, circular or elliptic polarizations.

The radar circuit may be configured to vary the transmit polarization of the radar signal transmitted by at least one the individual transmit antennas by coherently generating at least two different sets of simultaneously transmittable first and second transmit radar signals and by transmitting the respective sets via said one of the transmit antennas as superpositions of first and second transmit radar signals that differ in their respective resulting polarization. For example, the radar circuit may be configured to generate for each transmit antenna at least two different sets of simultaneously transmittable first and second transmit radar signals and to transmit the respective sets via the individual transmit antennas.

The radar circuit may generate first and second radar signals that create the same resulting transmit polarization at all transmit antennas, for example for performing a multiple input multiple output (MIMO) function or a beam steering function of the radar device. Thereby, the first and second radar signals of the individual transmit antennas may differ in additional signal parameters, such as frequency and/or phase and/or chirp or the like. For example, the first and second radar signals of the individual transmit antennas may exhibit different separability parameters, for example phase codes, to distinguish their contributions to the individual target reflections upon reception.

Alternatively, the radar circuit may generate first and second radar signals that generate different polarizations, for example mutually different polarizations, for the individual transmit antennas. The differences in polarization may then be evaluated by a logic unit of the radar circuit to separate simultaneously transmitted transmit radar signals by their respective polarization upon reception, for example for performing a MIMO function of the radar device. The resulting polarizations of the radar signals transmitted by the individual transmit antennas may thus constitute a separability parameter that allows to distinguish contributions of individual transmit radar signals to the target reflections received by the receive antennas.

To allow for a coherent transmission of the first and second radar signals of the individual transmit antennas, the radar circuit is configured to generate the first and second radar signal for each transmit antenna with a fixed phase difference that determines the resulting polarization of the superposition. During coherent evaluation of the first and second signal portions received by the individual receive antennas, the radar circuit establishes a phase difference between the first and second signal portions received by the same receive antenna and determines the polarization properties from the established phase difference.

The radar circuit may be configured to establish the total amplitude of the received target reflections by coherently evaluating, for example by coherently adding, the first and second signal portions received at each receive antenna. As the resulting total amplitude is then independent of the polarization of the received target reflection, the radar system of the present disclosure allows mitigation of polarization induced radar cross section (RCS) fluctuations.

The radar circuit may also be configured to coherently evaluate the first and second signal portions by determining polarimetric scattering properties of the target objects. To this end, the radar circuit may be configured to illuminate the target objects with varying resulting transmit polarizations and to determine, for each resulting transmit polarization, one or more signal portions of the target reflections with predetermined receive polarizations. The radar circuit may thus be configured to evaluate different scattering or propagation channels, each scattering or propagation channel comprising the signal amplitude of the received target reflections that amounts to a given combination of resulting transmit and receive polarization.

The determined polarimetric scattering properties or signal amplitudes of the individual scattering channels may be used for target classification, for example by using machine learning algorithms for target classification that receive the polarimetric scattering properties or signal amplitudes of the individual scattering channels as part of their input parameters or feature vectors. Additionally, the radar system may be configured to create occupancy grid maps of the traffic scene surrounding the radar system. It may then be configured to create individual occupancy layers for each receive polarization state or scattering channel. Furthermore, the logic unit may be configured to deduce a condition of a surface travelled by a vehicle comprising the radar system from the polarimetric scattering properties or signal amplitudes of the individual scattering channels.

The logic unit may also be configured to determine a number of scattering centers from the polarimetric scattering properties of the target object. Thereby, the logic unit may distinguish between various multipath reflections and/or complex targets and/or single scatterers. Furthermore, the logic unit may be configured to determine information about a target material of the target objects from their polarimetric scattering properties.

The radar system may be configured as a monostatic radar system, which has an antenna device that comprises both the arrangement of transmit antennas and the arrangement of receive antennas. The arrangement of transmit antennas and the arrangement of receive antennas may be placed on the same antenna surface of the antenna device. The radar system may operate in a frequency range between 10 GHz and 200 GHz, for example in a frequency range between 21 GHz and 26 GHz, such as between 24 GHz and 24.25 GHz, or in a frequency range between 76 GHz and 81 GHz, such as between 76 GHz and 77 GHz or 77 GHz and 81 GHz.

The radar circuit may be configured as a single integrated circuit or it may comprise several integrated circuits. Each integrated circuit may be configured as a microwave integrated circuit that routes high-frequency portions, such as microwave portions, of the radar signals on-chip. The individual integrated circuits may be configured as monolithic microwave integrated circuits (MMICs). Signal ports that connect the radar circuit to the individual transmit and receive antennas may be configured as external connection points of the integrated circuits.

The radar circuit may comprise transmit chains that generate the transmit radar signals from an oscillator signal of a common reference oscillator of the radar circuit and that are controlled by a control unit of the radar circuit. The control unit may be configured to control a timing and/or frequency chirp and/or phase offset and/or amplitude of the transmit radar signals via the transmit chains. The radar circuit may comprise separate transmit chains for each first and second transmit radar signal so that each transmit antenna is connected to separate transmit chains generating their respective first and second transmit radar signal. Alternatively, the radar circuit may comprise one transmit chain for each individual transmit antenna. In this case, each transmit chain may generate a common feed signal that is subsequently split into the first and second transmit radar signal of the respective transmit antenna, for example by a power divider, such as a T-junction or Wilkinson power divider. These power dividers may be integral part of the integrated circuits of the radar circuit.

The radar circuit may further comprise receive chains that evaluate the first and second signal portions received by the receive antennas. The receive chains may down-convert the received signal portions by mixing them with the oscillator signal of the reference oscillator and/or digitize the received signal portions for further signal processing, for example after down-conversion. The receive chains may further condition the received signal portions via frequency filters and/or variable attenuators and/or phase shifters. The radar circuit may comprise separate receive chains for each first signal portion and for each second signal portion received by the transmit antennas, so that the individual receive antennas are each connected to a first receive chain evaluating the first signal portion and a second receive chain evaluating the second signal portion.

According to an embodiment, the radar circuit is configured, for example by processing instructions stored within a control unit and/or a logic unit of the radar circuit, to reconstruct third signal portions of the received target reflections that have varying third receive polarizations by coherently combining the first and second signal portions received by the individual receive antennas. For example, the radar circuit may be configured to establish for each pair of one of the transmit antennas and one of the receive antennas a fully polarized propagation channel with variable resulting transmit polarization and/or variable reconstructed third receive polarization. These fully polarized propagation channels may, for example, be used by a logic unit of the radar system to construct a polarimetric MIMO array. This MIMO array may be configured to detect both angular positions and polarimetric scattering properties of individual target objects.

At least part of the third receive polarizations thereby differ from the first and second receive polarizations of the receive signal portions. The third signal portions constitute coefficients of decompositions of the received target reflections into components having the third receive polarizations and further components having polarizations orthogonal to the respective third receive polarizations. The third signal portions therefore amount to receive signals that would have been received by receive antennas having antenna polarizations equal to the third receive polarizations.

The radar circuit may be configured to reconstruct individual third signal portions for each receive antenna. The third receive polarizations of the individual third signal portions may be equal for each antenna. The individual third signal portions of the receive antennas may then be coherently processed, for example for establishing an angle resolving array or a beamforming array. The radar circuit may be configured to reconstruct at least two different third signal portions for each receive antenna, the different third signal portions of each antenna having two different third receive polarizations. The two different third receive polarizations may be non-orthogonal.

According to an embodiment, the radar circuit is configured to establish an angle-resolving MIMO array from the target reflections of the superpositions transmitted by the individual transmit antennas. The radar circuit may be configured to generate all superpositions transmitted via the individual transmit antennas having the same resulting transmit polarization so that the MIMO array operates at a well-defined transmit polarization. Furthermore, the radar circuit may be configured to reconstruct from the target reflections received via the individual receive antennas signal components, such as the third signal portions, that have the same receive polarization at all receive antennas. This allows for the construction of a polarimetric MIMO array that transmits with a well-defined transmit polarization and receives with a well-defined receive polarization.

The radar circuit may be configured to vary the transmit polarization and/or the receive polarization to establish propagation channels with varying polarimetric properties. The radar circuit may further be configured to evaluate the amplitude and/or intensity of the signal components reconstructed for the varying transmit and/or receive polarizations to determine scattering cross-sections of the individual scattering centers resolved by the respective propagations channels of the MIMO array.

For example, the radar circuit may be configured to establish a first MIMO array having propagation channels with a first resulting transmit polarization and a first reconstructed receive polarization and a second MIMO array having propagation channels with a second resulting transmit polarization and a second reconstructed receive polarization. Thereby, the resulting transmit polarizations and/or the reconstructed receive polarizations may differ from each other.

According to an embodiment, the radar circuit is configured, for example by processing instructions stored within a control unit and/or a logic unit of the radar circuit, to at least partly simultaneously or to simultaneously transmit the individual superpositions with mutually different resulting transmit polarizations and to separate the target reflections of the superpositions at each receive antenna based on the resulting transmit polarizations of the individual superpositions. The resulting transmit polarizations therefore constitute separability parameters that allow separation of the contributions of the radar signals transmitted by the individual transmit antennas at the receive antennas. Separation of the individual transmitted radar signals based on their resulting polarization may thus increase the number of simultaneously transmittable radar signals, for example in radar systems that are only able to generate a limited number of further separability parameters, such as phase codes.

According to an embodiment, the radar circuit is configured, for example by processing instructions stored within a control unit and/or a logic unit of the radar circuit, to determine from the polarization properties of the received target reflections polarimetric scattering parameters of the target objects for varying resulting transmit polarizations and/or varying reconstructed receive polarizations. The reconstructed receive polarizations may be given by the third receive polarizations of the reconstructed third signal portions.

For example, the radar circuit may establish mutual scattering parameters for at least one pair of resulting transmit polarizations and a corresponding pair of reconstructed receive polarizations. Thereby, the resulting transmit polarizations may equal the reconstructed receive polarizations. The resulting transmit polarizations and/or the reconstructed receive polarizations of the individual pairs may be orthogonal or non-orthogonal. The radar circuit may establish scattering parameters for several sets of such pairs.

The scattering parameters may represent the relative amplitudes and/or intensities and/or phases between the individual received target reflections and the individual transmitted superpositions of radar signals. The established scattering parameters of the individual pairs of transmit and receive polarization may be expressed as coefficients of a Jones matrix or Mueller matrix that describe the individual scattering processes generating the target reflections.

The radar circuit may be configured to calculate multiple scattering parameters or scattering matrices for different polarization pairs and thus measure the polarimetric signatures of the target objects. For determining the scattering parameters, the radar circuit may transmit superpositions having the required resulting transmit polarizations and reconstruct from the received first and second signal portions signal components, such as the third signal components, amounting to the required reconstructed receive polarizations of the target reflections.

According to an embodiment, the radar circuit is configured to establish scattering parameters for non-orthogonal polarization pairs of one of the resulting transmit polarizations and a reconstructed receive polarization. These parameters may, for example, describe scattering processes for polarization pairs that comprise left-hand circular (LHC) polarization and 45° linear polarization or polarization pairs that comprise elliptical (ELP) polarization and 45° linear polarization.

The corresponding scattering or Jones matrices may then amount to

$$S = \begin{pmatrix} S_{LHC-LHC} & S_{LHC-45°} \\ S_{45°-LHC} & S_{45°-45°} \end{pmatrix}$$

or

$$S = \begin{pmatrix} S_{ELP-ELP} & S_{ELP-45°} \\ S_{45°-ELP} & S_{45°-45°} \end{pmatrix}$$

with $S_{LHC-LHC}$ the scattering parameter for left-hand circular (LHC) transmit and receive polarization, $S_{LHC-45°}$ the scattering parameter for 45° linear transmit polarization and left-hand circular receive polarization, $S_{45°-LHC}$ the scattering parameter for left-hand circular transmit polarization and 45° linear receive tion, $S_{45°-45°}$ the scattering parameter for 45° linear transmit and receive polarization, $S_{ELP-ELP}$ the scattering parameter for elliptical transmit and receive polarization, $S_{ELP-45°}$ the scattering parameter for 45° linear transmit polarization and elliptical receive polarization, and $S_{45°-ELP}$ the scattering parameter for elliptical transmit polarization and 45° linear receive polarization. Compared to a calculation of scattering parameters only for orthogonal polarization pairs, an extension to non-orthogonal polarization pairs enhances the information available, for example for object detection.

According to an embodiment, the radar circuit is configured, for example by processing instructions stored within a control unit and/or a logic unit of the radar circuit, to measure from the first and second signal portions a polarization of the received target reflection for a given resulting transmit polarization. The radar circuit may be configured to determine the measured polarization as a location on the Poincare sphere, for example by determining three polarization dependent Stokes parameters, corresponding polarization ellipse parameters or Deschamps parameters. The radar circuit may therefore be configured to measure the complete polarization information of the received target reflections by coherently processing the first and second signal portions received by each individual receive antenna. The radar circuit may further be configured to vary the resulting transmit polarizations and to measure the polarization of the received target reflections for multiple resulting transmit polarizations, for example as a pattern of locations on the Poincare sphere.

According to an embodiment, the radar circuit is configured, for example by processing instructions stored within a control unit and/or a logic unit of the radar circuit, to evaluate the polarimetric scattering properties for object classification. Thereby, different targets, such as humans, cars, trucks and/or bicycles that show different polarimetric responses may be differentiated by the radar circuit or a logic unit of the radar circuit. The radar circuit may use a feature vector for object classification that comprises the measured polarization of the received target reflections or the location of the measured polarization on the Poincare sphere, for example represented by the three polarization dependent Stokes parameters, the corresponding polarization ellipse parameters or Deschamps parameters.

The radar circuit may, for example, be configured to measure a distribution or pattern of the polarizations of the received target reflections for varying resulting transmit polarizations and to determine the location of the polarization states of the received target reflections on the Poincare sphere for every resulting transmit polarization. It may further be configured to use this distribution or pattern to classify the target objects, for example by using a pattern recognition algorithm that processes the distribution or pattern of the target reflections on the Poincare sphere.

Such a graphical approach allows for a robust and versatile classification of target objects.

The radar circuit may be configured to implement machine learning algorithms as object classification algorithms, such as neural nets or support vector machines.

According to an embodiment, the radar circuit is configured, for example by processing instructions stored within a control unit and/or a logic unit of the radar circuit, to simultaneously and coherently activate several or all transmit antennas with first and second transmit radar signals that generate the same resulting transmit polarization, wherein the first and second transmit radar signals differ by predetermined phase offsets among the individual transmit antennas to generate a directed polarized radar beam, for example with a predetermined emission angle. This allows for the generation of a polarized radar beam having high intensity, for example for realizing a long-range radar function. The arrangement of transmit antennas then constitutes a phased array antenna.

The radar circuit may generate the first and second transmit radar signals in a way that for each transmit antenna the phase offsets of the respective first transmit radar signal with respect to the remaining first transmit radar signals are equal to the phase offsets of the respective second transmit radar signal with respect to the remaining second transmit radar signals. Thus, for each antenna the respective first and second transmit radar signals have equal phase shifts with respect to the remaining first and second transmit radar signals, respectively.

The radar circuit may be configured to alternately perform a beam steering function and a MIMO function. When performing the beam steering function, the radar circuit may generate the directed polarized radar beam by generating the individual superpositions of first and second radar signals at the individual transmit antennas with the predetermined phase offsets. When performing the MIMO function the radar circuit may generate the individual superpositions of first and second transmit radar signals having mutually different separability parameters.

According to an embodiment, the individual transmit antennas are configured to transmit their respective first and second transmit radar signals having a common phase center, wherein the common phase centers of the individual transmit antennas differ from each other. Additionally or alternatively, the individual receive antennas are configured to receive their respective first and second signal portions having a common phase center, wherein the common phase centers of the individual receive antennas differ from each other.

Due to the common phase centers of the transmit antennas, the first and second transmit radar signals are radiated from the same position at the individual transmit antennas. Furthermore, due to the common phase centers of the receive antennas, the first and second signal portions are received at the same position at the individual receive antennas. Consequently, for every pair of transmit and receive antennas, target reflections of the first and second transmit radar signals sent by the respective transmit antenna and received by the respective receive antenna have travelled the same distance and thus acquired the same phase shift upon reception. This allows, for example, for unambiguous reconstruction of the angular position of the target objects from any superposition of first and second signal portions received by the individual receive antennas or for a well-defined directional emission of a superposition of first and second transmit radar signals when operating the arrangement of transmit antennas as a phased array.

According to an embodiment, the radar circuit is configured, for example by processing instructions stored within a control unit and/or a logic unit of the radar circuit, to adjust the transmit radar signals based on calibration data of individual signal paths for the first and second transmit radar signals to generate the transmit polarization of the superposition of transmit radar signals at a reference surface.

Additionally or alternatively, the radar circuit is configured to correct the first and second signal portions received by the individual receive antennas based on calibration data to establish absolute phases and/or absolute amplitudes of the first and second signal portions at the reference surface. In either case, the reference surface may be located in front of an antenna surface comprising the arrangements of transmit and receive antennas.

The calibration data may depend on a position of the target objects or scattering centers creating the received target reflections. They may, for example, depend on an angular position and/or distance of the target objects or scattering centers. In general, the calibration data may reflect differences in radiation patterns and/or directivity of the individual transmit antennas for the first and second transmit polarization and of the individual receive antennas for the first and second receive polarization, respectively. The differences between the individual radiation patterns may amount to differences in phase and/or amplitude.

Each transmit antenna may have a first radiation pattern for the first transmit polarization and a second radiation pattern for the second transmit polarization that is different from the respective first radiation pattern. Likewise, each receive antenna may have a first radiation pattern for the first receive polarization and a second radiation pattern for the second receive polarization that is different from the respective first radiation pattern. Furthermore, the differences between the first and second radiation patterns of each antenna may depend on the angular position within the radiation patterns and/or the distance to the antenna.

For correcting the first and second signal portions, the radar circuit may be configured to establish a position of a respective scattering center, such as an angular position and/or distance, for every target reflection prior to the adjustment of the first and second signal portions and to determine the calibration data for the adjustment based on the established position of the scattering center.

The reference surface may be a reference plane. The reference surface may coincide with an antenna surface comprising the arrangements of transmit and receive antennas or it may be placed in front of such an antenna surface.

According to an embodiment, the radar circuit comprises separate transmit chains for each first and second transmit radar signal, wherein the individual transmit chains are configured to receive a common oscillator signal and to independently derive the first and second transmit radar signals from the common oscillator signal. By providing separate transmit chains for the first and second transmit radar signals transmitted via a given transmit antenna, the first and second transmit radar signals may be generated in an easy and flexible way using standard radar circuits.

The individual transmit chains may, for example, each be connected to a separate external connection point or signal port of integrated circuits of the radar circuit. Thereby, the transmit chains connected to an individual antenna may both be located on the same integrated circuit. Alternatively, they also may be located on separate integrated circuits. The separate integrated circuits thereby may have synchronized oscillator signals and/or timing signals. Using several synchronized integrated circuits allows a realization of the radar circuit using readily available standard components.

According to an embodiment, the radar circuit comprises a first and second integrated circuit, wherein the first and second integrated circuit have synchronized microwave oscillator signals. The first and second integrated circuit each comprise a set of transmit chains for generating the first and/or second transmit radar signals and a set of receive chains for evaluating the first and/or second signal portions of the received target reflections. Thereby, the first integrated circuit may be configured to generate a first transmit radar signal transmitted by one of the transmit antennas and the second integrated circuit may be configured to generate a second transmit radar signal transmitted by the same transmit antenna.

Using a first and second integrated circuit with synchronized oscillator signals allows for an easy and cost-efficient realization of the radar circuit from standard components. Using transmit chains from both integrated circuits for generating the transmitted radar signal of a single transmit antenna allows for an efficient use of all transmit chains of the individual integrated circuits, for example in cases in which the integrated circuits have an uneven number of transmit chains.

The integrated circuits may, for example, each have three transmit chains and four receive chains. Using two transmit chains for every transmit antenna and two receive chains for every receive antenna, such a configuration of integrated circuits may be connected to a total of three dual port-transmit antennas and four dual-port receive antennas.

According to an embodiment, the radar circuit is configured, for example by processing instructions stored within a control unit and/or a logic unit of the radar circuit, to generate each pair of first and second transmit radar signals transmitted by the individual transmit antennas from a respective common feed signal, wherein the radar circuit is configured to split the common feed signal into the respective first and second transmit radar signals. The radar circuit further comprises for each transmit antenna a first phase shifter and a first variable attenuator for adjusting the first transmit radar signal transmitted by the respective transmit antenna and a second phase shifter and a second variable attenuator for adjusting the second transmit radar signal transmitted by the respective transmit antenna.

Such a configuration allows for an easy and efficient generation of the first and second transmit radar signals. Adjustment of the transmit radar signals with the phase shifters and variable attenuators allows for a creation of superpositions having arbitrary polarizations including linear, circular and elliptical polarizations. The first and/or second phase shifter may be configured as digital phase shifters, for example as 6-bit phase shifters.

The individual common feed signals may be modulated among the individual transmit antennas to realize a MIMO function or beam steering function of the radar device. For example, the common feed signals may exhibit different separability parameters, such as phase codings, with respect to each other that allows for a separation of contributions radiated by the individual transmit antennas within the first and second signal portions received by the individual receive antennas. Likewise, the common feed signals may exhibit different relative phases to generate a directed radar beam by operating the arrangement of transmit antennas as a phased array.

According to an embodiment, the radar circuit comprises, for each transmit antenna, a common phase shifter that is configured to adjust a phase of the common feed signal of the respective transmit antenna, for example for performing a beam steering function and/or a phase coding function of the radar circuit. This allows for an easy and efficient implementation of the respective function with a single phase shifter per transmit antenna. For performing a phase coding function, the common phase shifter may be configured as a 1-bit phase shifter.

The radar device may be configured to operate the common phase shifter both for performing the beam steering function and for performing the phase coding function of the radar circuit. In this case, the common phase shifter may be configured to generate a multitude of different phase shifts, for example as a 6-bit phase shifter.

According to an embodiment, the radar circuit comprises, for each transmit antenna, a further common phase shifter that is configured to adjust the phase of the common feed signal of the respective transmit antenna independently of the adjustment by the first common phase shifter, wherein, for example, the radar circuit is configured to independently perform a beam steering function of the radar circuit using the common phase shifter and a phase coding function of the radar circuit using the further common phase shifter. Such a configuration allows for a flexible and easy implementation of two radar functions, for example of both the beam steering function and the phase coding function. The common phase shifter may be, for example, configured as a 6-bit phase shifter and/or the further common phase shifter may be, for example, configured as a 1-bit phase shifter.

In general, the concept of determining the location of the polarization states of the received target reflections on the Poincare sphere for every transmit polarization is independent from the exact physical implementation of the radar circuit. This concept may, for example, also be implemented with a radar device that comprises dedicated transmit antennas for every transmit polarization instead of the antennas that transmit superpositions of first and second radar signals with differing polarizations. Likewise, the radar circuit may have dedicated receive antennas for every receive polarization of a multitude of different receive polarizations.

Therefore, a second aspect of the present disclosure is directed at an automotive radar system for detecting target objects in a traffic scene, wherein the radar system comprises an arrangement of transmit antennas, an arrangement of receive antennas, and a radar circuit connected to the transmit antennas and the receive antennas. The radar circuit is configured, for example by processing instructions stored within a control unit and/or a logic unit of the radar circuit, to vary a transmit polarization of transmit radar signals transmitted via the arrangement of transmit antennas and to measure full polarization states of target reflections of the transmitted radar signals received by the receive antennas. Furthermore, the radar circuit is configured, for example by processing instructions stored within a control unit and/or a logic unit of the radar circuit, to determine the location of the measured polarization states of the received target reflections on the Poincare sphere for every transmitted transmit polarization.

The radar circuit may be configured to analyze the resulting pattern of polarization states on the Poincare sphere for object detection for example by using a pattern recognition algorithm, in the same way as it has been described in connection with the automotive radar system according to the first aspect of the present disclosure. Furthermore, all technical effects and embodiments that are disclosed in connection with the radar system according to the first aspect of the present disclosure also apply to the radar system according to the second aspect of the present disclosure, and vice versa.

Likewise, the concept of calculating multiple scattering parameters or scattering matrices for different polarization pairs and thus measure the polarimetric signatures of the target objects illuminated by the radar device is independent from the exact physical implementation of the radar circuit.

A third aspect of the present disclosure is therefore directed at an automotive radar system for detecting target objects in a traffic scene, wherein the radar system comprises an arrangement of transmit antennas, an arrangement of receive antennas, and a radar circuit connected to the transmit antennas and the receive antennas. The radar circuit is configured, for example by processing instructions stored within a control unit and/or a logic unit of the radar circuit, to vary a transmit polarization of transmit radar signals transmitted via the arrangement of transmit antennas and to measure varying polarization components of target reflections of the transmitted radar signals received by the receive antennas. Furthermore, the radar circuit is configured, for example by processing instructions stored within a control unit and/or a logic unit of the radar circuit, to determine polarimetric scattering parameters of the target objects for varying polarization pairs of transmit polarizations and measured polarization components of the received target reflections. Thereby, the scattering parameters may be established for pairs of non-orthogonal polarization states.

In addition, all technical effects and embodiments that are disclosed in connection with the radar system according to the first aspect of the present disclosure also apply to the radar system according to the third aspect of the present disclosure, and vice versa.

In another aspect, the present disclosure is directed at a vehicle, such as a car, comprising one of the radar systems according to the present disclosure.

In another aspect, the present disclosure is directed at a method for detecting target objects in a traffic scene with an automotive radar system, wherein the radar system comprises an arrangement of transmit antennas, an arrangement of receive antennas, and a radar circuit connected to the transmit antennas and the receive antennas. The method comprises:

- transmitting coherent superpositions of respective first transmit radar signals having first transmit polarizations and respective second transmit radar signals having second transmit polarizations that are different from the first transmit polarizations via the transmit antennas;
- separating target reflections of the transmitted radar signals received from the target objects into first signal portions having first receive polarizations and into second signal portions having second receive polarizations that are different from the first receive polarizations at the receive antennas;
- varying, with the radar circuit, resulting transmit polarizations of the transmitted superpositions of transmit radar signals by coherently generating different sets of first and second transmit radar signals for the individual transmit antennas and by simultaneously and coherently transmitting the first and second transmit radar signals of the individual sets via their respective transmit antennas;
- coherently evaluating, with the radar circuit, the first and second signal portions received by the receive antennas to determine polarization properties of the received target reflections.

DRAWINGS

Exemplary embodiments and functions of the present disclosure are described herein in conjunction with the following drawings, showing schematically:

Fig. 1 a radar system according to a first embodiment of the present disclosure;

Fig. 2 a pair of transmit and receive antennas of the radar system illuminating a target object;

Fig. 3 a radar system according to a second embodiment of the present disclosure;

Fig. 4 a radar system according to a third embodiment of the present disclosure;

Fig. 5 a radar system according to a fourth embodiment of the present disclosure;

Fig. 6 an antenna device of the radar systems according to the present disclosure with a reference surface;

Fig. 7 a distribution of received target reflections on the Poincare sphere;

Fig. 8 a vehicle with a radar system according to the present disclosure.

DETAILED DESCRIPTION

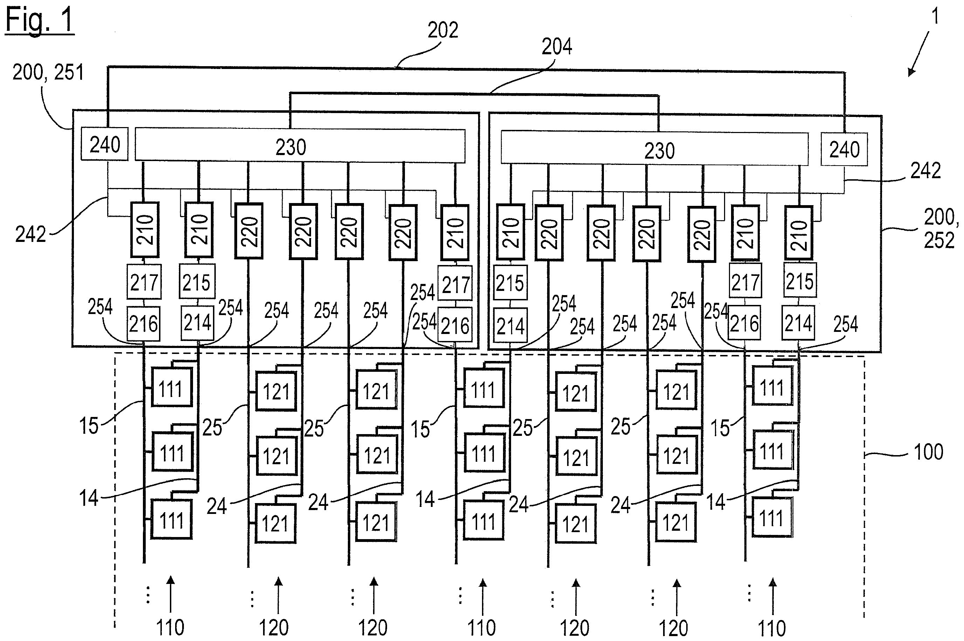

**Fig. 1** depicts an automotive radar system 1 having an antenna device 100 and a radar circuit 200.

The antenna device 100 comprises an arrangement of transmit antennas 110 and an arrangement of receive antennas 120. The individual transmit antennas 110 and the individual receive antennas 120 are each configured as serially-fed patch antennas. Each transmit antenna 110 comprises an array of serially connected patch antenna elements 111 and each receive antenna 120 comprises an array of serially connected patch antenna elements 121.

Each transmit antenna 110 is a dual-port antenna that is configured to receive a first transmit radar signal 14 via a first antenna port and a second transmit radar signal 15 via a second antenna port. Furthermore, each transmit antenna 110 is a dual-polarized antenna that is configured to transmit the first transmit radar signal 14 with a first transmit polarization, namely with linear vertical polarization, and to transmit the second transmit radar signal 15 with a second transmit polarization, namely with linear horizontal polarization.

Likewise, each receive antenna 120 is a dual-polarized antenna that is configured to separate received radar signals into a first signal portion 24 that corresponds to a component of the received radar signals having a first receive polarization, namely linear vertical polarization, and into a second signal portion 25 that corresponds to a component of the received radar signals having a second receive polarization, namely linear horizontal polarization. Each receive antenna 120 is furthermore configured as a dual-port antenna that outputs the first signal portion 24 via a first antenna port and the second signal portion 25 via a second antenna port.

The radar circuit 200 further comprises a first integrated circuit 251 and a second integrated circuit 252. Each integrated circuit 251, 252 comprises three transmit chains 210 and four receive chains 220. Every transmit antenna 110 is connected to two separate transmit chains 210, whereby one of the transmit chains 210 provides the first transmit radar signal 14 and the other one of the transmit chains 210 provides the second transmit radar signal 15 of the respective transmit antenna 110.

The individual transmit chains 210 generate the first and second transmit radar signals 14, 15 from a common oscillator signal 242 that is provided by a reference oscillator 240 of the respective integrated circuit 251, 252. The individual transmit chains 210 of the integrated circuits 251, 252 are controlled by respective control units 230 of the individual integrated circuits 251, 252. Thereby, the control units 230 control individual signal parameters of the first and second transmit radar signals 14, 15, such as frequency, amplitude, frequency chirp, burst timing or the like.

The first and second integrated circuits 251, 252 of the radar circuit 200 are synchronized and configured to coherently generate all first and second transmit radar signals 14, 15 provided by the radar circuit 200. Coherent generation of the radar signals 14, 15 establishes well-defined and controllable phase relationships among the individual first and second transmit radar signals 14, 15.

A synchronization mechanism of the first and second integrated circuit 251, 252 comprises exchanging a synchronization signal 202 for synchronizing the oscillators 240 of the integrated circuits 251, 252. Furthermore, the synchronization mechanism comprises a synchronization of the control units 230 via a trigger signal 204 to provide a common timing basis.

The first antenna port receiving the first transmit radar signal 14 and the second antenna port receiving the second transmit radar signal 15 of each individual transmit antennas 110 are connected to separate external connection points 254 of the integrated circuits 251, 252. These external connection points 254 constitute signal ports of the radar circuit 200.

For each transmit antenna 110, the radar circuit 200 is configured to simultaneously transmit the respective first transmit radar signal 14 and the respective second transmit radar signal 15, so that each transmit antenna 110 transmits a coherent superposition of the respective first and second radar signal 14, 15. For varying the resulting polarization of the coherent superpositions transmitted by the individual transmit antennas 110, the integrated circuits 251, 252 comprise, for each transmit antenna 110, a first phase shifter 214 and a first variable attenuator 215 that are located in a signal path connecting the transmit chain 210 that generates the respective first transmit radar signal 14 with the external connection point 254 that outputs the respective first transmit radar signal 14. Furthermore, the integrated circuits 251, 252 comprise, for each transmit antenna 110, a second phase shifter 216 and a second variable attenuator 217 that are located in a signal path connecting the transmit chain 210 that generates the respective second transmit radar signal 15 with the external connection point 254 that outputs the respective second transmit radar signal 15. By way of example, the phase shifters 214, 216 are configured as 6-bit phase shifters.

By adjusting the first and second phase shifters 214, 216 and the first and second variable attenuators 215, 216 connected to the same transmit antenna 110, the radar circuit 200 adjusts the relative phase offsets and amplitude differences of the first and second radar signal 14, 15 that are transmitted via the respective transmit antenna 110. In this way, the radar circuit 200 variably adjusts the resulting polarization of the radar signal transmitted by the respective transmit antenna 110, whereby the transmitted radar signal is a coherent superposition of the respective first and second radar signal 14, 15.

For example, by setting a relative phase offset of 0° and zero amplitude difference, the radar circuit 200 generates a superposition that has a resulting polarization of 45°. Likewise by setting a relative phase offset of 90° and zero amplitude difference, the radar circuit 200 generates a superposition that has a circular polarization as resulting polarization.

One of the transmit antennas 110 of the antenna device 100 depicted in Fig. 1 receives its first transmit radar signal 14 from a transmit chain 210 of the second radar circuit 252 and its second transmit radar signal 15 from a transmit chain 210 of the first radar circuit 251. The radar circuit 200 is configured to also coherently generate the first and second radar signal 14, 15 transmitted via this transmit antenna 110 based on the synchronization of the first and second integrated circuit 251, 252 via the synchronization signal 202 and the trigger signal 204.

The radar circuit 200 is further configured to coherently evaluate the first and second signal portions 24, 25 received from the individual receive antennas 120. Each receive antenna 120 is connected via its antenna ports to two receive chains 220 of the radar circuit 200. One of these receive chains 220 evaluates the first signal portion 24 and the other one of these receive chains 220 evaluates the second signal portion 25. For coherently evaluating the first and second signal portions 24, 25, the individual receive chains 220 mix the received signal portions 24, 25 with the oscillator signal 242 provided by the synchronized oscillators 240 of the integrated circuits 251, 252.

The radar device 1 is configured to determine absolute phase and amplitude values of the first and second signal portions 24, 25 evaluated by the individual receive chains 220. By coherently combining the first and second signal portions 24, 25 received via the same receive antenna 120, the radar device 1 reconstructs polarization properties of radar signals received via the respective receive antenna 120, such as the total polarization of the received signal or a decomposition of the received signal into several polarization components, for example into two orthogonal or non-orthogonal polarization components. In general, the radar device 1 is configured to determine decompositions of the received signals into all possible polarization components.

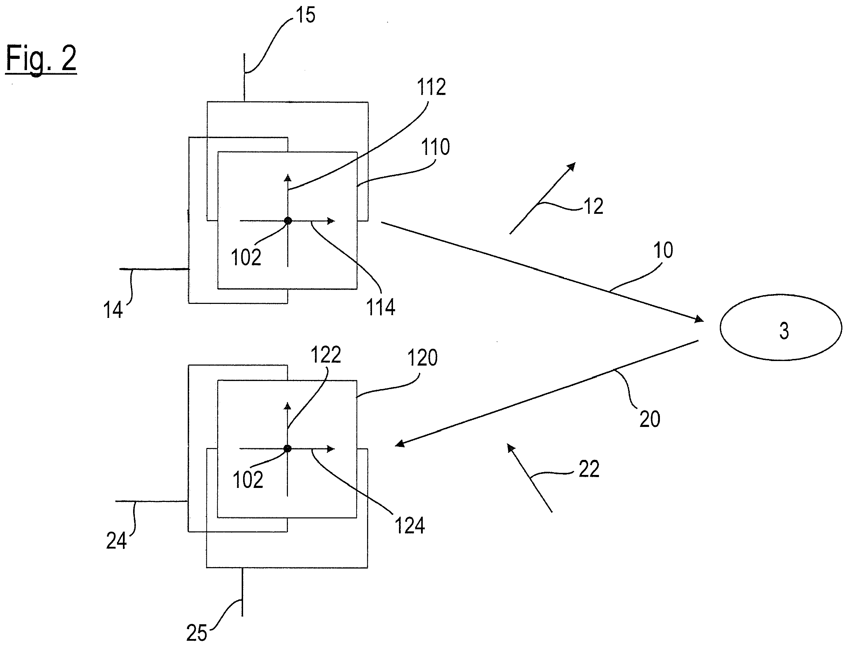

Fig. 2 exemplarily depicts an antenna element 111 of one of the transmit antennas 110 illuminating a target object 3 with a coherent superposition 10 of the first and second radar signal 14, 15 fed to the transmit antenna 110 and an antenna element 121 of one of the receive antennas 120 receiving target reflections 20 of the superposition 10 by the target object 3. All other antenna elements 111 of the transmit antennas 110 are configured as it is disclosed for the antenna element 111 shown in Fig. 2 and all other antenna elements 121 of the receive antennas 120 of the radar system 1 are configured as it is disclosed for the antenna element 121 shown in Fig. 2.

As exemplarily shown in Fig. 2, the transmit antennas 110 of the antenna device 100 are configured as differentially-fed patch antennas with antenna elements 111 that receive the first radar signal 14 at a first set of oppositely located connection points and that receive the second radar signal 15 at a second set of oppositely located connection points. The connection points of the individual sets are symmetrically positioned around a center of the antenna element 111 of the transmit antenna 110, whereby the center also provides a common phase center 102 for the radiation created from the first and second radar signal 14, 15. Since every antenna element 111 of the transmit antenna 110 has such a common phase center 102, each individual transmit antennas 110 as a whole also has a common phase center for the radiation created from the first and second radar signal 14, 15. The connection points for the first radar signal 14 are rotated by 90° with respect to the connection points for the second radar signal 15 around the center of the antenna element 111 of the transmit antenna 110.

The transmit antenna 110 radiates the first transmit radar signal 14 having as the first transmit polarization 112 linear vertical polarization and the second transmit radar signal 15 having as the second transmit polarization 114 linear horizontal polarization. The resulting polarization 12 of the transmitted superposition 10 is then determined by the amplitude differences and phase offsets between the first and second radar signal 14, 15.

Upon reflection at the target object 3, the transmitted superposition 10 exhibits a polarization change so that the target reflection 20 received by the receive antenna 120 depicted in Fig. 2 has a receive polarization 22 that is different from the resulting transmit polarization 12. The receive antenna 120 is configured to decompose the target reflection 20 into the first signal portion 24 amounting to the polarization component of the target reflection 20 that has the first receive polarization 122, namely linear vertical polarization, and into the second signal portion 25 amounting to the polarization component of the target reflection 20 that has the second receive polarization 124, namely linear horizontal polarization.

Like the transmit antennas 110, the receive antennas 120 are also configured as dual-polarized differential patch antennas with antenna elements 121 that have a set of first connection points located at opposite sides of a common phase center 102 of the individual antenna elements 121 of the receive antennas 120, the first connection points providing the first signal portion 24, and a set of second connection points located at opposite sides of the common phase center 102 and rotated by 90° with respect to the first connection points, the second connection points providing the second signal portion 25.

The radar system 1 shown in Fig. 1 is configured to coherently transmit the individual superpositions 10 via the different transmit antennas 110 so that the individual superpositions 10 have a well-defined and controllable phase relationship with respect to each other.

The radar system 1 comprises a logic unit, which is not shown in Fig. 1 and which is connected to the control units 230. The logic unit is configured to operate the control units 230 and to change the resulting transmit polarizations 12 of the transmit radar signals 10 transmitted via the individual transmit antennas 110 and to reconstruct third signal portions of the target reflections 20 received via the individual receive antennas 120. The third signal portions amount to projections of the received target reflections 20 on individual given third receive polarizations. Therefore, the third signal portions constitute coefficients of decompositions of the received target reflections 20 into polarization components having the third receive polarizations.

Each pair of one of the transmit antennas 110 and one of the receive antennas 120 establishes a fully polarimetric propagation channel. The logic unit is configured to vary the resulting transmit polarization 12 and the reconstructed third receive polarization of every propagation channel and to reconstruct polarimetric scattering properties of the target object 3, for example individual radar cross sections or angular distribution of scattering centers for varying pairs of resulting transmit polarization 12 and reconstructed third receive polarization. The control unit of the radar system 1 shown in Fig. 1 is configured to reconstruct a total of twelve propagation channels. For each one of the three fully polarized transmit antennas 110, four different propagation channels are established, one for each one of the four fully polarized receive antennas 120.

By way of example, the radar system 1 thereby performs both a MIMO function for angular resolution of detected target objects 3 and a beam steering function for transmitting a directed radar beam having a well-defined emission angle. For both the MIMO function and the beam steering function, the control unit 230 controls every pair of transmit chains 210 connected to the same transmit antenna 110 to generate transmit radar signals 14, 15 having the same phase difference with respect to the transmit radar signals 14, 15 generated by the transmit chains 120 connected to the remaining transmit antennas 110.

For realizing the MIMO function, the control units 230 separate the contributions of the individual superpositions 10 transmitted by the individual transmit antennas 110 to the received target reflections 20 and reconstructs a virtual MIMO array from the separated signal contributions. To achieve this separation, the control units 230 generate the superpositions 10 transmitted via the individual transmit antennas 110 with mutually different phase codes as separability parameters. The control units 230 thereby generate with both transmit chains 210 connected to the same transmit antenna 210 identical separability parameters, such as phase codes, whereby the separability parameters generated by transmit chains 210 connected to different transmit antennas 110 are mutually different from each other.

With alternative embodiments of the radar system 1, the control unit may be configured to adjust the polarization 12 of the transmit radar signal 10 and the polarization of the reconstructed third receive polarization of the received target reflections 20 to increase the number of propagation channels available for evaluation.

In one example, a first set of superpositions 10 of radar signals 14, 15 are transmitted via the transmit antennas 110, wherein each transmit antenna 110 transmits one of the superpositions 10 of the first set. The individual superpositions 10 of the first set thereby have mutually different separability parameters, such as phase codes, and the same resulting transmit polarizations 12, namely a first polarization. Furthermore, a second set of superpositions 10 of radar signals 14, 15 are transmitted via the transmit antennas 110, wherein each transmit antenna 110 transmits one of the superpositions 10 of the second set. The individual superpositions 10 of the second set also have mutually different separability parameters, such as phase codes, and the same resulting transmit polarizations 12, namely a second polarization.

The first and second polarizations thereby are orthogonal. For example, the superpositions 10 of the first set may have linear horizontal polarization as the first polarization and the superpositions 10 of the second set may have linear vertical polarization as the second polarization. The separability parameters used to separate the individual superpositions 10 of the first set may be the same as the separability parameters used to separate the individual superpositions 10 of the second set. In this case, the control unit may use three different separability parameters, such as three different phase codes.

The logic unit is configured to reconstruct from the target reflections 20 of the individual superpositions 10 co-polarized third signal portions that have the same polarization as the individual transmitted superpositions 10. In this way, the logic unit of the radar system 1 shown in Fig. 1 establishes 24 propagation channels in total, twelve propagation channels by sending and receiving with the first polarization and twelve propagation channels by sending and receiving with the second polarization.

With other embodiments, the logic unit may be configured to additionally reconstruct cross-polarized third signal portions that have polarizations orthogonal to the polarizations of the individual transmitted superpositions 10. In this way, the logic unit of the radar system 1 sown in Fig. 1 establishes 48 propagation channels in total, twelve propagation channels by sending and receiving with the first polarization, twelve propagation channels by sending and receiving with the second polarization, twelve propagation channels by sending with the first polarization and receiving with the second polarization and twelve propagation channels by sending with the second polarization and receiving with the first polarization.

To further increase the number of available propagation channels, the logic unit may be configured to additionally send and receive with further polarizations, such as further pairs of mutually orthogonal polarizations, for example 45° linear and 135° linear polarization. For each of these pairs, propagation channels for co-polarized sending and receiving, as well as propagation channels for cross-polarized sending and receiving may be established.

For realizing the beam steering function, the control units 230 generate the superpositions 10 transmitted via the individual transmit antennas 110 with fixed and constant phase differences among each other. To this end, the control units 230 generate the same relative phase offset with pairs of transmit chains 210 connected to the same transmit antenna 110, whereby the phase offsets of the individual pairs are mutually different from each other.

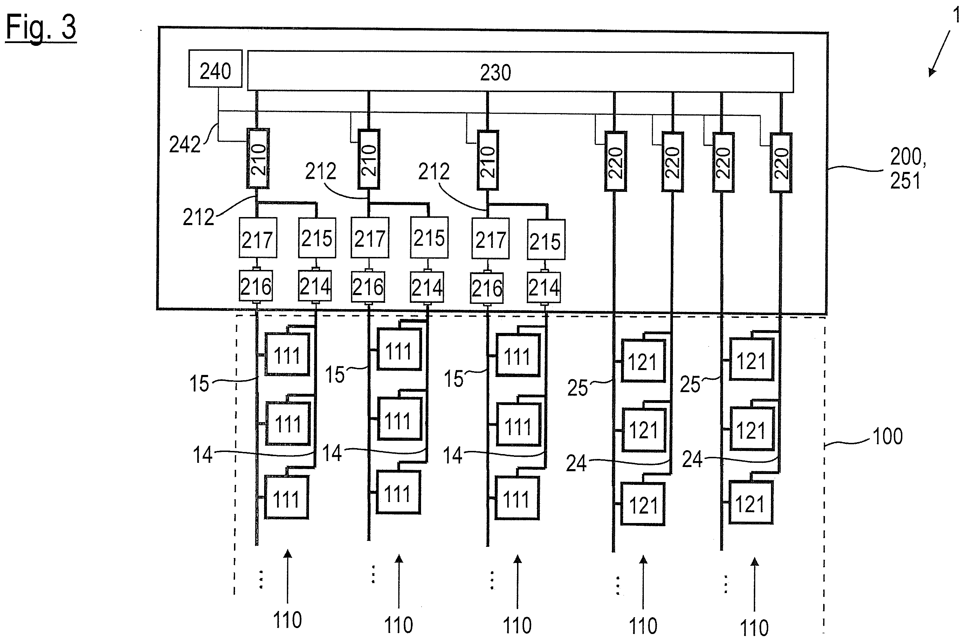

Fig. 3 depicts a second embodiment of the radar system 1. As far as no differences are described or apparent from the Figures, the radar system 1 according to the second embodiment is configured as it is disclosed in connection with the radar system 1 according to the first embodiment and vice versa.

The radar system 1 according to the second embodiment has a radar circuit 200 that consist of a single integrated circuit 251. The integrated circuit 251 comprises three transmit chains 210 and four receive chains 220. Every transmit antenna 110 of the antenna device 100 is connected to a single transmit chain 210. Thereby, each transmit chain 210 provides a common feed signal 212 that is split into the first transmit radar signal 14 and the second transmit radar signal 15. After splitting, the first transmit radar signal 14 is conditioned by the first phase shifter 214 and the first variable attenuator 215 and the second transmit radar signal 15 is conditioned by the second phase shifter 216 and the second variable attenuator 217.

With the radar system 1 according to the second embodiment, the control unit 230 of the radar circuit 200 performs a beam steering function and a MIMO function by coherently operating the individual transmit chains 210. For performing the beam steering function, the control unit 230 operates the transmit chains 210 to generate constant phase offsets among the individual common feed signals 212. For performing the MIMO function, the control unit 230 operates the transmit chains 210 to generate the individual common feed signals 212 having mutually different separability parameters, such as phase codes.

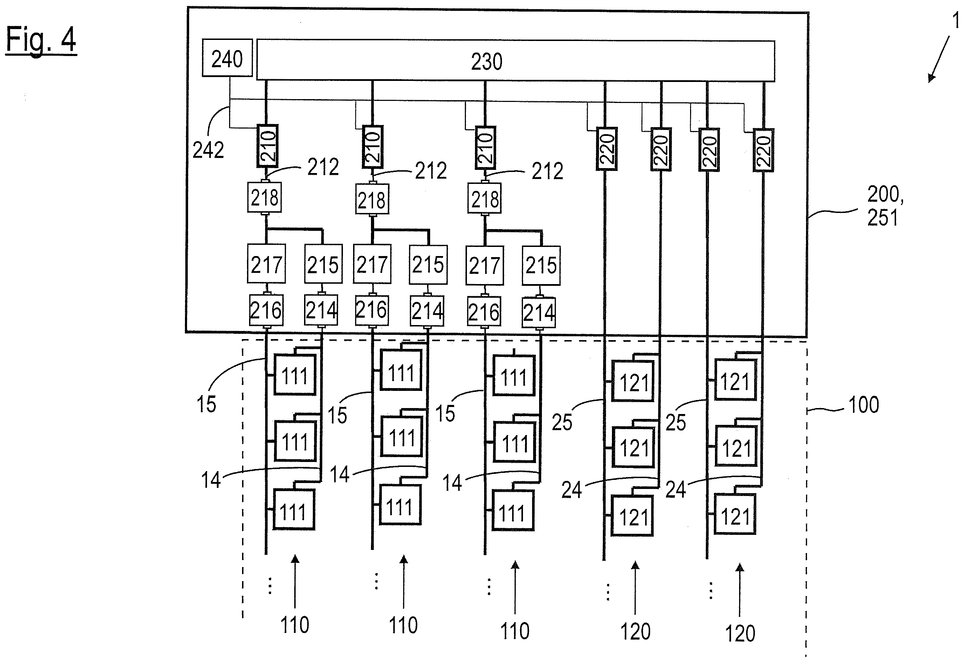

Fig. 4 depicts a third embodiment of the radar device 1. As far as no differences are described or apparent from the Figures, the third embodiment of the radar device 1 is configured as it is disclosed in connection with the second embodiment of the radar device 1 and vice versa.

The radar circuit 200 of the third embodiment of the radar device 1 has common phase shifters 218 that receive the common feed signals 212 from the transmit chains 210 prior to splitting the common feed signals 212 into the first and second transmit radar signals 14, 15. By way of example, the common phase shifters 118 are configured as 6-bit phase shifters.

The control unit 213 is configured to control the common phase shifters 218 to perform both the MIMO function and the beam steering function. For performing the MIMO function, the common phase shifters 218 are operated to generate mutually different phase codes among the common feed signals 212. For performing the beam steering functions, the common phase shifters 218 are operated to generate constant phase offsets among the common feed signals 212 for operating the transmit antennas 110 as a phased array.

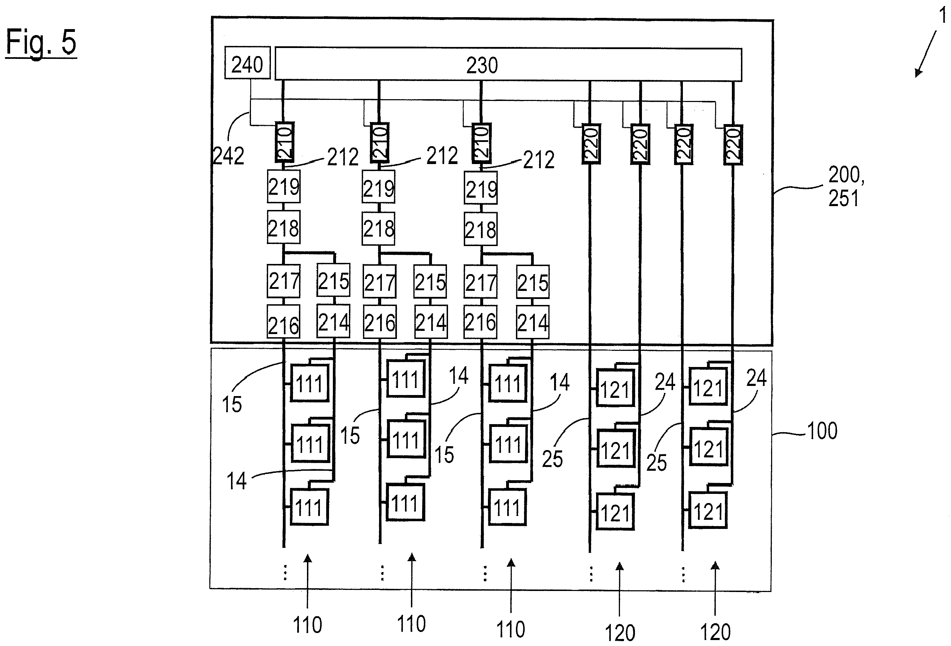

Fig. 5 depicts a fourth embodiment of the radar device 1. As far as no differences are described or apparent from the Figures, the fourth embodiment of the radar device 1 is configured as it is disclosed in connection with the third embodiment of the radar device 1 and vice versa.

With the fourth embodiment of the radar device 1, the radar circuit 200 comprises further common phase shifters 219 that are, in addition to the common phase shifters 218, placed in the signal path of the common feed signal 212 prior to splitting it into the first and second transmit radar signal 14, 15. By way of example, the further common phase shifters 219 are configured as 1-bit phase shifters. The control unit 230 is configured to perform the beam steering function of the radar device 1 by operating the common phase shifters 218 in order to generate the constant phase offsets among the individual common feed signals 212 and to perform the MIMO function of the radar device 1 by operating the further common phase shifters 219 in order to generate the phase codes necessary for separation of the transmitted superpositions 10 upon reception.

The radar devices 1 according to the present disclosure are configured to determine from the polarization properties of the received target reflection 20 polarimetric scattering parameters of the target objects 3 for varying pairs of first and second polarization states. One such pair comprises non-orthogonal polarization states, such as left hand circular polarization as the first polarization state and 45° linear polarization as the second polarization state.

For determining the scattering parameters for a given pair, the radar devices 1 transmits a first superposition 10 having a first resulting transmit polarization 12 that equals the first polarization state, such as left hand circular polarization, and a second superposition 10 having a second resulting transmit polarization 12 that equals the second polarization state, such as 45° linear polarization. For both transmitted superpositions 10, the radar devices 1 decompose the received target reflections 20 into a first component having a first reconstructed receive polarization that equals the first polarization state and into a second component having a second reconstructed receive polarization that equals the second polarization state.

The radar devices 1 calculate scattering parameters for every combination of one of the transmitted superpositions 10 and one of the reconstructed components of the received target reflections 20. In total, this results in four scattering parameters that form coefficients of a scattering matrix that describes polarimetric scattering with respect to the pair of polarization states.

The radar devices 1 are further configured to classify the target objects 3 based on the determined scattering parameters using a machine learning algorithm. The scattering parameters thereby form elements of a feature vector input to the machine learning algorithm.

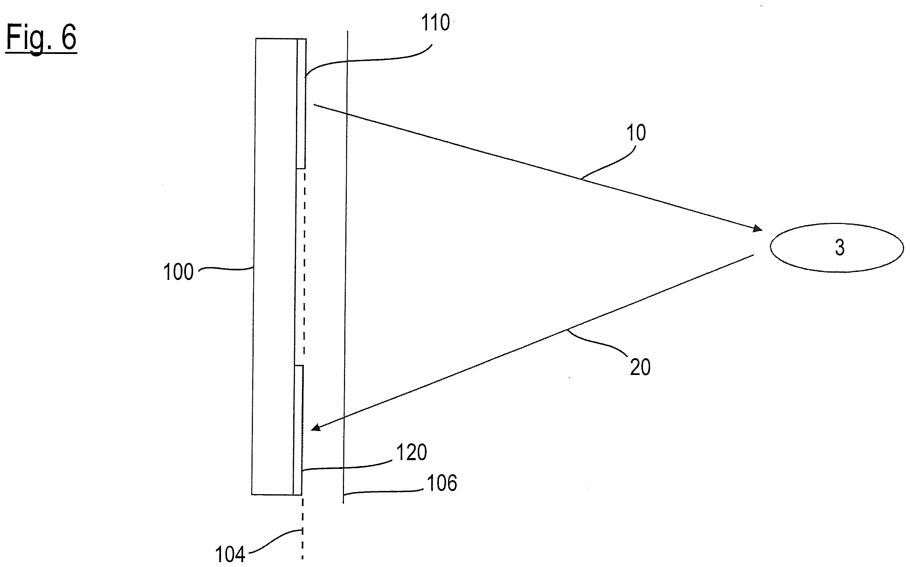

**Fig. 6** depicts the antenna device 100 of the radar devices 1 in a cut perpendicular to a planar antenna surface 104 that comprises the arrangements of transmit and receive antennas 110, 120. A planar reference surface 106 is located in front of the antenna surface 104, whereby the reference surface 106 is parallel to the antenna surface 104.

The radar circuits 200 of the radar devices 1 are configured to adjust the phases and amplitudes of the first and second radar signals 14, 15 to controllably generate the resulting transmit polarizations 12 of the superpositions 10 emitted by the individual transmit antennas 110 at the reference plane 106. The adjustment of the first and second radar signals 14, 15 is based on calibration data that comprise signal propagation parameters, such as attenuations, phase shifts or the like, of the signal paths for the first and second transmit radar signals 14, 15 from the individual transmit chains 210 to the reference plane 106. The propagation parameters used for calibration may be frequency-dependent.

The radar circuits 200 of the radar devices 1 are further configured to correct the first and second signal portions 24, 25 received by the individual receive antennas 120 based on the calibration data. These corrections also correct for polarization-induced differences in the radiation patterns of the transmit and receive antennas 110, 120.

For every transmit antenna 110, a radiation pattern for transmission with the first transmit polarization 112 deviates from a radiation pattern for transmission with the second transmit polarization 114, both in phase and amplitude. The radar devices 1, for example logic units of the radar devices 1, use the calibration data to correct for these differences of the radiation patterns and reconstruct polarizations of the superpositions 10 at the location of the target objects 3. Likewise, radiation patterns of the individual receive antennas 120 for reception with the first receive polarization 122 deviate from radiation patterns of the individual receive antennas 120 for reception with the second receive polarization 124, both in phase and amplitude. The radar devices 1 use the calibration data to correct for these differences and establish polarizations of the target reflections 20 at the location of the target objects 3.

The differences in the radiation patterns of the transmit and receive antennas 110, 120 depend on the location of the target object 3 generating the target reflections 20. Therefore, the radar devices 1 are configured to determine the calibration data used for correction based on the location of the target object 3. To this end, the radar devices 1 determine the location, such as an angular position, of the target objects 3 from the received target reflections 20.

Depending on the location of the target object 3, the radar devices 1 determine the transmit polarization 12 of the superposition 10 at the location of the target object 3 and the receive polarization 22 of the target reflection 20 generated by the target object 3, also at the location of the target object 3. From the transmit polarization 12 and the receive polarization 22 at the location of the target object 3, the radar devices 1 then reconstruct the polarimetric properties of the target objects 3, for example scattering parameters, scattering matrices, reflection patterns on the Poincare sphere or the like.

With alternative embodiments, the radar circuits 200 of the radar devices 1 may be configured to only adjust the first and second radar signals 14, 15 using the calibration data to realize a given transmit polarization 12 or to only adjust the first and second signal portions 24, 25 of the received target reflections 20 using the calibration data to correct the receive polarization 22.

The radar devices 1 are further configured to reconstruct the receive polarization 22 of the target reflections 24 for varying resulting transmit polarizations 12 from the first and second signal components 24, 25 and to use this information for classification of the target object 3. Thereby, the radar devices 1 evaluate the distribution of the receive polarizations 22 for the varying transmit polarizations 12 on the Poincare sphere.

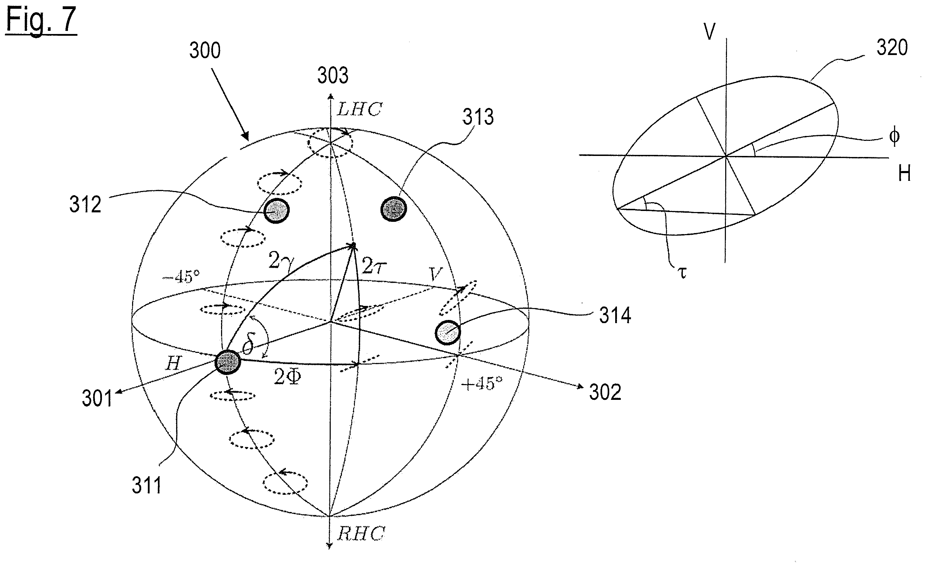

**Fig. 7** depicts such a distribution of the receive polarization on the Poincare sphere 300. The Poincare sphere 300 is defined as the unit sphere in a coordinate system that is spanned by three orthogonal Stokes vectors, namely a first Stokes vector 301, a second Stokes vector 302 and a third Stokes vector 303. Locations that lie on opposite sides of the Poincare sphere 300 with respect to its center represent orthogonal polarization states. The polar coordinates of a given polarization state on the Poincare sphere 300 are given by angles $\phi$ and $\tau$ that define the shape and orientation of the polarization ellipse 320 of the respective polarization state, as also depicted in Fig. 7. Thereby, $\phi$ denotes the orientation angle of the polarization ellipse and $\tau$ denotes its ellipticity.

A line parallel to the first stokes vector 301 intersects the Poincare sphere 300 at locations representing horizontal (H) and vertical (V) linear polarization, respectively. A line parallel to the second stokes vector 302 intersects the Poincare sphere 300 at locations representing ± 45° linear polarization and a line parallel to the third stocks vector 303 intersects the Poincare sphere 300 at locations representing left-hand circular (LHC) and right-hand circular (RHC) polarization, respectively.

Fig. 7 shows positions on the Poincare sphere 300 of a fist target reflection 311 obtained with a first transmit polarization 12, a second target reflection 312 obtained with a second transmit polarization 12, a third target reflection 313 obtained with a third transmit polarization 12 and a fourth target reflection 314 obtained with a fourth transmit polarization 12.

The distribution of the target reflections 311, 312, 313, 314 on the Poincare sphere 300 yield unique patterns for different target objects 3 and the radar device 1 classifies the target objects 3 based on these patterns. The patterns are thereby evaluated by a machine learning pattern recognition algorithm.

The radar device 1 uses, besides the receive polarization 22, additional signal parameters of the target reflections 20 for classification of the target objects 3. These additional signal parameters may be an amplitude, frequency, bandwidth, Doppler shift or the like. The pattern recognition algorithm processes these additional signal parameters as further input parameters that differentiate the individual patterns on the Poincare sphere 300.

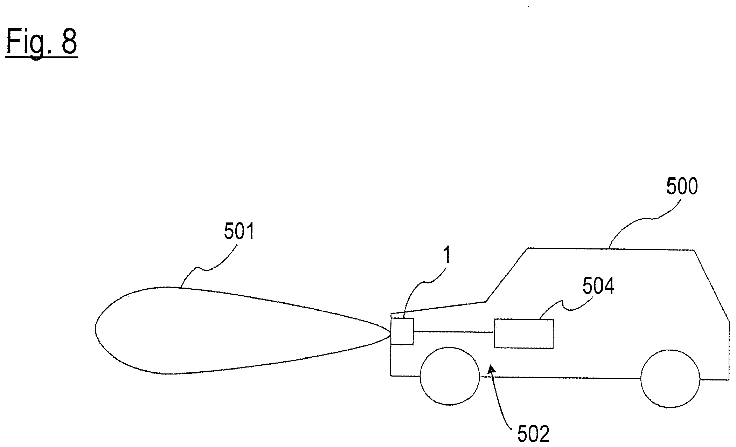

**Fig. 8** depicts a vehicle 500 that is equipped with a radar system 1 according to the present disclosure. In the embodiment shown in Fig. 8, the radar system 1 is configured as a front radar of the vehicle 500 and a radiation field 501 of the antenna device of the radar system 1 is directed in the forward direction of the vehicle 500. The radar system 1 is part of a vehicle control system 502 of the vehicle 500 and is connected to a control device 504 of the vehicle control system 502. The control device 504 is configured to perform advanced driver's assist functions, such as adaptive cruise control, emergency brake assist, lane change assist or autonomous driving, based on data signals received from the radar system 1. These data signals represent the positions of target objects in front of the radar device 1 mounted to the vehicle 500. The control device 504 is configured to at least partly control the motion of the vehicle 500 based on the data signals received from the radar system 1. For controlling the motion of the vehicle, the control device 504 may be configured to brake and/or accelerate and/or steer the vehicle 500.

Reference numeral list

| 1 | radar system |
| 3 | target object |
| 10 | superposition |
| 12 | transmit polarization |
| 14 | first transm it radar signal |
| 15 | second transmit radar signal |
| 20 | target reflection |
| 22 | receive polarization |
| 24 | first signal portion |
| 25 | second signal portion |
| 100 | antenna device |
| 102 | phase center |
| 104 | antenna surface |
| 106 | reference surface |
| 110 | transm it antennas |
| 111 | transmit antenna elements |
| 112 | first transm it polarization |
| 114 | second transmit polarization |
| 120 | receive antennas |
| 121 | receive antenna elements |
| 122 | first receive polarization |
| 124 | second receive polarization |
| 200 | radar circuit |
| 202 | synchronization signal |
| 204 | trigger signal |
| 210 | transmit chain |
| 212 | feed signal |
| 214 | first phase shifter |
| 215 | first variable attenuator |
| 216 | second phase shifter |
| 217 | second variable attenuator |
| 218 | common phase shifter |
| 219 | further common phase shifter |
| 220 | receive chain |
| 230 | control unit |
| 240 | oscillator |
| 242 | oscillator signal |
| 251 | first integrated circuit |
| 252 | second integrated circuit |
| 254 | external connection point |
| 300 | Poincare sphere |
| 301 | first Stokes vector |
| 302 | second Stokes vector |
| 303 | third Stokes vector |
| 311 | first target reflection |
| 312 | second target reflection |
| 313 | third target reflection |
| 314 | fourth target reflection |
| 500 | vehicle |
| 501 | radiation field |
| 502 | vehicle control system |
| 504 | vehicle control device |

**Claims**

1. Automotive radar system (1) for detecting target objects (3) in a traffic scene,
   wherein the radar system (1) comprises an arrangement of transmit antennas (110), an arrangement of receive antennas (120), and a radar circuit (200) connected to the transmit antennas (110) and the receive antennas (120),
   wherein each transmit antenna (110) transmits coherent superpositions of respective first transmit radar signals (14) having first transmit polarizations (112) and respective second transmit radar signals (15) having second transmit polarizations (114) that are different from the first transmit polarizations (112),
   wherein each receive antenna (120) separates target reflections (20) of the transmitted radar signals (14, 15) received from the target objects (3) into first signal portions (24) having first receive polarizations (122) and into second signal portions (25) having second receive polarizations (124) that are different from the first receive polarizations (122),
   wherein the radar circuit (200) varies resulting transmit polarizations (12) of the transmitted superpositions (10) of transmit radar signals (14, 15) by coherently generating different sets of first and second transmit radar signals (14, 15) for the individual transmit antennas (110) and by simultaneously and coherently transmitting the first and second transmit radar signals (14, 15) of the individual sets via their respective transmit antennas (110),

wherein the radar circuit (200) coherently evaluates the first and second signal portions (24, 25) received by the receive antennas (120) to determine polarization properties of the received target reflections (20).

2. Radar system (1) according to claim 1,
wherein the radar circuit (200) reconstructs third signal portions of the received target reflections (20) that have varying third receive polarizations by coherently combining the first and second signal portions (24, 25) received by the individual receive antennas (120),
wherein at least part of the third receive polarizations differ from the first and second receive polarizations (122, 124) of the receive signal portions (24, 25),
wherein, for example, the radar circuit (200) establishes for each pair of one of the transmit antennas (110) and one of the receive antennas (120) a fully polarized propagation channel with variable resulting transmit polarization (12) and/or variable reconstructed third receive polarization.

3. Radar system (1) according to one of the preceding claims,
wherein the radar circuit (200) establishes an angle-resolving MIMO array from the target reflections (20) of the superpositions (10) transmitted by the individual transmit antennas (110).

4. Radar system (1) according to one of the preceding claims,
wherein the radar circuit (200) at least partly simultaneously transmits the individual superpositions (10) with mutually different resulting transmit polarizations (12) and separates the target reflections (20) of the superpositions (10) at each receive antenna (120) based on the resulting transmit polarizations (12) of the individual superpositions (10).

5. Radar system (1) according to one of the preceding claims,
wherein the radar circuit (200) determines from the polarization properties of the received target reflections (20) polarimetric scattering parameters of the target objects (3) for varying resulting transmit polarizations (12) and/or varying reconstructed receive polarizations.

6. Radar system (1) according to claim 5,

wherein the radar circuit (200) establishes scattering parameters for non-orthogonal polarization pairs of one of the resulting transmit polarizations (12) and a reconstructed receive polarization of the target reflections (20).

7. Radar system (1) according to one of the preceding claims,
wherein the radar circuit (200) measures from the first and second signal portions (24, 25) a polarization (22) of the received target reflection (20) for a given resulting transmit polarization (12),
wherein, for example, the radar circuit (200) may determine the measured polarization (22) as a location on the Poincare sphere (300).

8. Radar system (1) according to one of the preceding claims,
wherein the radar circuit (200) evaluates the polarimetric scattering properties for object classification.

9. Radar system (1) according to one of the preceding claims,
wherein the radar circuit (200) simultaneously and coherently activates several or all transmit antennas (110) with first and second transmit radar signals (14, 15) that generate the same resulting transmit polarization (12),
wherein the first and second transmit radar signals (14, 15) differ by predetermined global phase offsets among the individual transmit antennas (110) to generate a directed polarized radar beam, for example with a predetermined emission angle.

10. Radar system (1) according to one of the preceding claims,
wherein the individual transmit antennas (110) transmit their respective first and second transmit radar signals (14, 15) having a common phase center (102) and wherein the common phase centers (102) of the individual transmit antennas (110) differ from each other, and/or
wherein the individual receive antennas (120) receive their respective first and second signal portions (24, 25) having a common phase center (102) and wherein the common phase centers (102) of the individual receive antennas (120) differ from each other.

11. Radar system (1) according to one of the preceding claims,
wherein the radar circuit (200) adjusts the transmit radar signals (14, 15) based on calibration data of individual signal paths for the first and second transmit radar signals (14, 15) to generate the transmit polarization (12) of the superposition of transmit radar signals (14, 15) at a reference surface (106), and/or wherein the radar circuit (200) corrects the first and second signal portions (24, 25) received by the individual receive antennas (120) for polarization-dependent based on calibration data to establish absolute phases and/or absolute amplitudes of the first and second signal portions (24, 25) at the reference surface (104),
wherein, for example, the reference surface (104) is located in front of an antenna surface (104) comprising the arrangements of transmit and receive antennas (110, 120).

12. Radar system (1) according to one of the preceding claims,
wherein the radar circuit (200) comprises separate transmit chains (210) for each first and second transmit radar signal (14, 15),
wherein the individual transmit chains (210) receive a common oscillator signal (242) and independently derive the first and second transmit radar signals (14, 15) from the common oscillator signal (242).

13. Radar system (1) according to one of the preceding claims,
wherein the radar circuit (200) comprises a first and second integrated circuit (251, 252),
wherein the first and second integrated circuit (251, 252) have synchronized microwave oscillator signals (242),
wherein the first and second integrated circuit (251, 252) each comprise a set of transmit chains (210) for generating the first and/or second transmit radar signals (14, 15) and a set of receive chains (220) for evaluating the first and/or second signal portions (24, 25) of the received target reflections (20),
wherein, for example, the first integrated circuit (251) generates a first transmit radar signal (14) transmitted by one of the transmit antennas (110) and the second integrated circuit (252) generates a second transmit radar signal (15) transmitted by the same transmit antenna (110).

14. Radar system (1) according to one of the preceding claims,
wherein the radar circuit (200) generates each pair of first and second transmit radar signals (14, 15) transmitted by the individual transmit antennas (110) from a respective common feed signal (212),
wherein the radar circuit (200) splits the common feed signal (212) into the respective first and second transmit radar signals (14, 15),
wherein the radar circuit (200) comprises for each transmit antenna (110) a first phase shifter (214) and a first variable attenuator (215) for adjusting the first transmit radar signal (14) transmitted by the respective transmit antenna (110) and a second phase shifter (216) and a second variable attenuator (217) for adjusting the second transmit radar signal (14) transmitted by the respective transmit antenna (110).

15. Radar system (1) according to claim 14,
wherein the radar circuit (200) comprises, for each transmit antenna (110), a common phase shifter (218) that adjusts a phase of the common feed signal (212) of the respective transmit antenna (110),
for example for performing a beam steering function and/or a phase coding function of the radar circuit (200).

16. Radar system (1) according to claim 15,
wherein the radar circuit (200) comprises, for each transmit antenna (110), a further common phase shifter (219) that adjusts the phase of the common feed signal (212) of the respective transmit antenna (110) independently of the adjustment by the first common phase shifter (218),
wherein, for example, the radar circuit (200) independently performs a beam steering function of the radar circuit (200) using the common phase shifter (218) and a phase coding function of the radar circuit (200) using the further common phase shifter (219).

Fig. 1

Fig. 2

Fig. 3

EP 4 001 966 A1

Fig. 4

## Fig. 5

EP 4 001 966 A1

Fig. 6

Fig. 7

EP 4 001 966 A1

Fig. 8

500

504

502

1

501

Europäisches
Patentamt

European
Patent Office

Office européen
des brevets

## EUROPEAN SEARCH REPORT

Application Number

EP 20 20 7004

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/087365 A1 (IEE SA [LU]) 17 May 2018 (2018-05-17) * figure 2 * * abstract * * paragraph [0014] * ----- | 1-16 | INV. G01S17/931 G01S13/931 G01S7/02 G01S13/88 G01S7/03 |
| X | US 2016/025839 A1 (TRUMMER STEFAN [DE]) 28 January 2016 (2016-01-28) * abstract * * paragraphs [0006], [0007] * ----- | 1-16 | |

TECHNICAL FIELDS
SEARCHED      (IPC)

G01S

The present search report has been drawn up for all claims

| Place of search | Date of completion of the search | Examiner |
|---|---|---|
| Munich | 20 April 2021 | Alberga, Vito |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 7004

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | | Publication date | Patent family member(s) | | Publication date |
|---|---|---|---|---|---|
| WO 2018087365 | A1 | 17-05-2018 | CN | 109923434 A | 21-06-2019 |
| | | | EP | 3538918 A1 | 18-09-2019 |
| | | | LU | 93302 B1 | 18-06-2018 |
| | | | US | 2019271765 A1 | 05-09-2019 |
| | | | WO | 2018087365 A1 | 17-05-2018 |
| US 2016025839 | A1 | 28-01-2016 | CN | 105339807 A | 17-02-2016 |
| | | | DE | 102013102424 A1 | 11-09-2014 |
| | | | EP | 2972476 A1 | 20-01-2016 |
| | | | JP | 2016516983 A | 09-06-2016 |
| | | | KR | 20150127188 A | 16-11-2015 |
| | | | US | 2016025839 A1 | 28-01-2016 |
| | | | WO | 2014139992 A1 | 18-09-2014 |

EPO FORM P0459

For more details about this annex : see Official Journal of the European Patent Office, No. 12/82